# EUROPÄISCHE PATENTANMELDUNG

(11) **EP 4 389 392 A1**
(43) Veröffentlichungstag der Anmeldung: **26.06.2024**
(21) Anmeldenummer: 23217211.4
(22) Anmeldetag: 15.12.2023
(51) Int. Cl.: B29C 48/12, B29C 48/30, B33Y 80/00, B29C 64/10, B29L 31/30

(54) **EXTRUSIONSWERKZEUG ZUR HERSTELLUNG EINES KUNSTSTOFFBAUTEILS, EXTRUDIERANLAGE, VERFAHREN ZUR HERSTELLUNG EINES EXTRUSIONSBAUTEILS UND EXTRUSIONSBAUTEIL**

(30) Priorität: 19.12.2022 DE 102022213951
(71) Anmelder: CQLT SaarGummi Technologies S.à.r.l., 5544 Remich (LU)
(72) Erfinder: KOTZ, Stefan, 5544 Remich (LU); MÜLLER, Sven, 5544 Remich (LU)
(74) Vertreter: Maiwald GmbH

(57) **Zusammenfassung**

Es wird ein Extrusionswerkzeug (20) zur Herstellung eines Kunststoffbauteils beschrieben. Das Extrusionswerkzeug (20) umfasst einen Grundkörper (24) und eine in Extrusionsrichtung (P) am stromabwärtigen Ende des Grundkörpers (24) befestigte Auslassplatte (26). Wenigstens ein Bauteil aus Grundkörper (24) und Auslassplatte (26) ist wenigstens abschnittsweise durch ein additives Fertigungsverfahren aus Metall hergestellt. Ferner wird eine Extrudieranlage mit einem solchen Extrusionswerkzeug (20) vorgestellt. Zusätzlich werden ein Verfahren zur Herstellung eines Extrusionsbauteils sowie ein zugehöriges Extrusionsbauteil präsentiert.

## Beschreibung

Die Erfindung betrifft ein Extrusionswerkzeug zur Herstellung eines Kunststoffbauteils.

Zudem betrifft die Erfindung eine Extrudieranlage mit einem Extrusionswerkzeug.

Die Erfindung ist ferner auf ein Verfahren zur Herstellung eines Extrusionsbauteils und ein Extrusionsbauteil gerichtet.

Solche Extrusionswerkzeuge, zugehörige Extrudieranlagen, Verfahren und damit hergestellte Extrusionsbauteile sind aus dem Stand der Technik bekannt.

Unter anderem werden diese zur Herstellung von Dichtungen verwendet, die beispielsweise in Kraftfahrzeugen verwendet werden.

In diesem Anwendungsfeld kommt es besonders darauf an, die Extrusionsbauteile effizient und kostengünstig herzustellen, gleichzeitig jedoch ein vorgegebenes Qualitätsniveau mit hoher Zuverlässigkeit zu halten.

Die Aufgabe der Erfindung besteht daher darin, in diesem Spannungsfeld verbesserte Extrusionswerkzeuge, verbesserte Extrudieranlagen sowie verbesserte Verfahren zur Herstellung von Extrusionsbauteilen und verbesserte Extrusionsbauteile anzugeben.

Die Aufgabe wird durch ein Extrusionswerkzeug zur Herstellung eines Kunststoffbauteils gelöst. Das Extrusionswerkzeug umfasst einen Grundkörper und eine in Extrusionsrichtung am stromabwärtigen Ende des Grundkörpers befestigte Auslassplatte. Wenigstens ein Bauteil aus Grundkörper und Auslassplatte ist wenigstens abschnittsweise durch ein additives Fertigungsverfahren aus Metall hergestellt. Es versteht sich dabei, dass der Grundkörper und die Auslassplatte als separate Bauteile ausgeführt sein können oder integriert, d.h. als ein einziges, zusammenhängendes Bauteil gestaltet sein können. Ferner ist es möglich, dass der Grundkörper mehrteilig ausgeführt ist. Auch die Auslassplatte kann mehrteilig ausgeführt sein. Ein solches Extrusionswerkzeug ist strukturell einfach aufgebaut. Ferner bieten additive Fertigungsverfahren eine hohe Gestaltungsfreiheit. Dadurch lassen sich im Inneren des Extrusionswerkzeugs strömungstechnisch günstige Fließgeometrien, z. B. Fließkanäle, schaffen, in denen vergleichsweise geringe Strömungsverluste anfallen. Somit kann ein solches Extrusionswerkzeug energieeffizient betrieben werden. Der zweiteilige Aufbau bewirkt zudem, dass nur ein geringer Aufwand für die Montage des Extrusionswerkzeugs und die Justage seiner Komponenten entsteht. Auch dadurch lässt sich der strukturell vergleichsweise einfache Aufbau mit strömungstechnisch günstigen Fließgeometrien für den plastifizierten Kunststoff kombinieren. Außerdem lässt sich ein derartiges Extrusionswerkzeug leicht reinigen, da zur Reinigung lediglich die Auslassplatte vom Grundkörper abgenommen werden muss. Ferner ist ein solches Extrusionswerkzeug kompakt aufgebaut. Insgesamt können mittels eines derartigen Extrusionswerkzeugs auf kosteneffiziente Weise Extrusionsbauteile von hoher Qualität hergestellt werden.

In einer Ausführungsform umfasst das Extrusionswerkzeug ein Zuführteil für plastifizierten Kunststoff, das auf einer der Auslassplatte entgegengesetzten Seite am Grundkörper montiert ist. Auch das Zuführteil ist wenigstens abschnittsweise durch ein additives Fertigungsverfahren aus Metall hergestellt. Die hinsichtlich des Grundkörpers und der Auslassplatte angegebenen Effekte und Vorteile gelten in gleicher Weise für das Zuführteil.

Das Metall, aus dem wenigstens ein Bauteil aus Grundkörper, Auslassplatte und Zuführteil hergestellt ist, ist beispielsweise eine Stahllegierung.

Das erfindungsgemäße Extrusionswerkzeug ist insbesondere zum Herstellen von Bauteilen aus Polymeren geeignet. Bei diesen Polymeren handelt es sich vorzugsweise um Elastomere. Es wird beispielsweise Ethylen-Propylen-Dien-Kautschuk (EPDM) verwendet. Mittels des erfindungsgemäßen Extrusionswerkzeugs können folglich Elastomerprofile hergestellt werden, die als Dichtungsprofile verwendet werden können. Auch kann es sich bei den Polymeren um Thermoplaste handeln.

Additive Fertigungsverfahren werden auch als generative Fertigungsverfahren bezeichnet. Umgangssprachlich werden sie häufig 3-D-Druck genannt. Ein beispielhaftes generatives Fertigungsverfahren ist das selektive Laserschmelzen (Englisch: Selective Laser Melting, SLM). Dieses Verfahren ist besonders gut geeignet, um Extrusionswerkzeuge oder Komponenten von Extrusionswerkzeugen herzustellen.

In einer bevorzugten Ausführungsform ist wenigstens ein Bauteil aus Grundkörper und Auslassplatte vollständig durch ein additives Fertigungsverfahren aus Metall hergestellt. Für den Fall, dass das Extrusionswerkzeug ein Zuführteil umfasst, kann auch das Zuführteil vollständig durch ein additives Fertigungsverfahren aus Metall hergestellt sein. Derartige Bauteile lassen sich effizient und kostengünstig herstellen. Dabei ergeben sich die bereits im Zusammenhang mit additiven Fertigungsverfahren genannten Effekte und Vorteile in besonderem Maße. Insbesondere lassen sich so in hohem Maße strömungstechnisch günstige Fließgeometrien innerhalb der Komponenten des Extrusionswerkzeugs schaffen.

Bevorzugt ist wenigstens ein Bauteil aus Grundkörper und Auslassplatte einstückig hergestellt. Dadurch ergibt sich ein besonders einfacher Aufbau des Extrusionswerkzeugs. Die notwendigen Montage- und Justage-Prozesse werden auf ein Minimum reduziert.

Gemäß einer Variante umfasst das Extrusionswerkzeug einen primären Fließkanal für Extrusionsmaterial. Ein erster Abschnitt des primären Fließkanals ist im Grundkörper angeordnet. Ein zweiter Abschnitt des primären Fließkanals ist in der Auslassplatte angeordnet. Dabei mündet der erste Abschnitt des primären Fließkanals entlang der Extrusionsrichtung in den zweiten Abschnitt des primären Fließkanals. Mit anderen Worten erstreckt sich der primäre Fließkanal durch den Grundkörper und die Auslassplatte. Zudem kann der primäre Fließkanal zentral im Extrusionswerkzeug verlaufen. Darunter ist zu verstehen, dass der primäre Fließkanal in einem Mittelabschnitt des Extrusionswerkzeugs angeordnet ist, also nicht an dessen Rand. Insbesondere kann sich dabei der primäre Fließkanal entlang der Extrusionsrichtung erstrecken. Nachdem der primäre Fließkanal zum Führen von Extrusionsmaterial vorgesehen ist, kann er auch als Extrusionskanal bezeichnet werden. In diesem Zusammenhang entspricht eine Außenkontur des primären Fließkanals zumindest im Bereich einer zugehörigen Auslassöffnung am stromabwärtigen Ende des zweiten Abschnitts im Wesentlichen der zu erreichenden Geometrie des Extrusionsbauteils. Es lassen sich somit zuverlässig Extrusionsbauteile mit der gewünschten Geometrie herstellen. Ein zentral angeordneter Extrusionskanal lässt sich einfach und kostengünstig herstellen. Darüber hinaus verursacht er nur vergleichsweise wenige Strömungsverluste, sodass sich das Extrusionswerkzeug effizient betreiben lässt.

In einer Alternative umfasst das Extrusionswerkzeug ferner einen sekundären Fließkanal für Extrusionsmaterial. Ein erster Abschnitt des sekundären Fließkanals ist im Grundkörper angeordnet und ein zweiter Abschnitt des sekundären Fließkanals in der Auslassplatte. Dabei mündet der erste Abschnitt des sekundären Fließkanals entlang der Extrusionsrichtung in den zweiten Abschnitt des sekundären Fließkanals. Der sekundäre Fließkanal erstreckt sich also durch den Grundkörper und die Auslassplatte. Der erste Abschnitt des sekundären Fließkanals kann wenigstens abschnittsweise schraubenförmig um den ersten Abschnitt des primären Fließkanals laufen. Der erste Abschnitt des sekundären Fließkanals hat also im Weitesten Sinne zumindest abschnittsweise die Form einer Wendel, sie um den ersten Abschnitt des primären Fließkanals windet. Auch der sekundäre Fließkanal ist zum Führen von Extrusionsmaterial vorgesehen und kann daher auch als Extrusionskanal bezeichnet werden. Werden im primären Fließkanal und im sekundären Fließkanal unterschiedliche Extrusionsmaterialien geführt, können Extrusionsbauteile aus zwei verschiedenen Materialien hergestellt werden. Dabei sind der erste Abschnitt des primären Fließkanals und der erste Abschnitt des sekundären Fließkanals voneinander separat. Der zweite Abschnitt des primären Fließkanals und der zweite Abschnitt des sekundären Fließkanals können sich auslassseitig vereinigen. Man spricht in diesem Zusammenhang auch von Extrusionsbauteilen, die aus zwei Komponenten hergestellt sind. Indem der erste Abschnitt des sekundären Fließkanals wenigstens abschnittsweise schraubenförmig um den ersten Abschnitt des primären Fließkanals verläuft, ergibt sich ein kompakter Aufbau des Extrusionswerkzeugs. Ferner lässt sich auf diese Weise Extrusionsmaterial vergleichsweise effizient, d.h. vergleichsweise verlustarm durch den sekundären Fließkanal leiten.

In einer Variante umfasst das Extrusionswerkzeug einen tertiären Fließkanal für Extrusionsmaterial. Ein erster Abschnitt eines tertiären Fließkanals ist im Grundkörper angeordnet und ein zweiter Abschnitt des tertiären Fließkanals in der Auslassplatte. Dabei mündet der erste Abschnitt des tertiären Fließkanals entlang der Extrusionsrichtung in den zweiten Abschnitt des tertiären Fließkanals. Es erstreckt sich also auch der tertiäre Fließkanal durch den Grundkörper und die Auslassplatte. Bei einer Betrachtung senkrecht zur Extrusionsrichtung kann zudem der erste Abschnitt des tertiären Fließkanals wenigstens abschnittsweise geradlinig verlaufen. Bei einer Betrachtung in Extrusionsrichtung liegt der erste Abschnitt des tertiären Fließkanals zudem außerhalb des ersten Abschnitts des primären Fließkanals. Der tertiäre Fließkanal ist ebenfalls zum Führen von Extrusionsmaterial vorgesehen und kann daher auch als Extrusionskanal bezeichnet werden. Werden im primären Fließkanal, im sekundären Fließkanal und im tertiären Fließkanal unterschiedliche Extrusionsmaterialien geführt, können Extrusionsbauteile aus drei verschiedenen Materialien hergestellt werden. Man spricht in diesem Zusammenhang auch von Extrusionsbauteilen, die aus drei Komponenten hergestellt sind. Dabei sind der erste Abschnitt des primären Fließkanals, der erste Abschnitt des sekundären Fließkanals und der erste Abschnitt des tertiären Fließkanals voneinander separat. Der zweite Abschnitt des primären Fließkanals, der zweite Abschnitt des sekundären Fließkanals und der zweite Abschnitt des tertiären Fließkanals können sich auslassseitig vereinigen, um ein zusammenhängendes Extrusionsbauteil herstellen zu können. Durch seinen geradlinigen Verlauf lässt sich der tertiäre Fließkanal einfach und kostengünstig herstellen. Das zugehörige Extrusionswerkzeug ist kompakt. Ferner ist ein derartiger Fließkanal einfach zu reinigen.

Die Bezeichnung der Fließkanäle als primärer, sekundärer und tertiärer dient lediglich der einfacheren Beschreibung. Eine Anzahl an Fließkanälen ist nicht impliziert. Insbesondere kann ein Extrusionswerkzeug auch mehrere sekundäre und/oder mehrere tertiäre Fließkanäle aufweisen. Außerdem ist es möglich, dass ein Extrusionswerkzeug einen oder mehrere tertiäre Fließkanäle aufweist, jedoch keinen sekundären Fließkanal. Der umgekehrte Fall ist genauso möglich.

In einer Ausführungsform verzweigen sich der erste Abschnitt des sekundären Fließkanals und/oder der erste Abschnitt des tertiären Fließkanals innerhalb des Grundkörpers und entlang der Extrusionsrichtung in wenigstens zwei Fließkanalstränge. Es können somit Extrusionsbauteile hergestellt werden, bei denen über den sekundären Fließkanal und/oder den tertiären Fließkanal zugeführtes Material entweder an unterschiedlichen Stellen im Extrusionsbauteil Verwendung findet oder mit besonderer Gleichmäßigkeit verwendet werden soll. Es lassen sich somit qualitativ hochwertige und/oder funktionsintegrierte Extrusionsbauteile herstellen.

Bevorzugt erfolgt die Verzweigung kontinuierlich. Das bedeutet, dass der sekundäre Fließkanal und/oder der tertiäre Fließkanal im Bereich der Verzweigung keine sprunghafte Querschnittsänderung aufweisen. Das gilt sowohl für die Form als auch für die Größe des Querschnitts. Vielmehr ändert sich der Querschnitt kontinuierlich. Dadurch weisen der sekundäre Fließkanal und/oder der tertiäre Fließkanal im Bereich der Verzweigung nur geringe Strömungsverluste auf.

Es versteht sich, dass der erste Abschnitt des sekundären Fließkanals auch insgesamt ohne sprunghafte Querschnittsänderung ausgeführt sein kann. Anders gesagt kann der erste Abschnitt des sekundären Fließkanals ausschließlich kontinuierliche Querschnittsänderungen umfassen.

Alternativ oder zusätzlich kann auch der erste Abschnitt des tertiären Fließkanals insgesamt ohne sprunghafte Querschnittsänderungen ausgeführt sein. Mit anderen Worten kann der erste Abschnitt des tertiären Fließkanals ausschließlich kontinuierliche Querschnittsänderungen umfassen.

Zudem kann wenigstens einer aus dem ersten Abschnitt des primären Fließkanals, dem ersten Abschnitt des sekundären Fließkanals und dem ersten Abschnitt des tertiären Fließkanals prallflächenfrei ausgeführt sein. Bevorzugt sind, sofern vorhanden, der erste Abschnitt des primären Fließkanals, der erste Abschnitt des sekundären Fließkanals und der erste Abschnitt des tertiären Fließkanals prallflächenfrei ausgeführt. Das bedeutet, dass eine einer Mittelachse des jeweiligen Abschnitts folgende Strömung niemals frontal auf eine Begrenzungsfläche des ersten Abschnitts des jeweiligen Fließkanals trifft. Notwendige Änderungen der Strömungsrichtung erfolgen also kontinuierlich, d.h. nicht abrupt. Es ergeben sich auf diese Weise geringe Strömungsverluste in den prallflächenfrei ausgeführten ersten Abschnitten der jeweiligen Fließkanäle.

Wie bereits erwähnt, kann der Grundkörper einstückig hergestellt sein. In einem solchen Fall sind der erste Abschnitt des primären Fließkanals, der erste Abschnitt des sekundären Fließkanals und der erste Abschnitt des tertiären Fließkanals, sofern vorhanden, trennebenenfrei ausgeführt. Eine entlang eines dieser Abschnitte verlaufende Strömung passiert somit keine Trennflächen, an denen aneinander montierte, benachbarte Bauteile aufeinandertreffen. Auch das ist strömungstechnisch vorteilhaft, da so unerwünschte Ablagerungen von Extrusionsmaterial verhindert werden. Auch werden auf diese Weise Bereiche eliminiert, die unerwünschte Turbulenzen in einer Strömung hervorrufen können.

Auch kann wenigstens einer aus dem ersten Abschnitt des primären Fließkanals, dem ersten Abschnitt des sekundären Fließkanals und dem ersten Abschnitt des tertiären Fließkanals kantenfrei ausgeführt ist. Bevorzugt sind alle Abschnitte kantenfrei ausgeführt. Die Wände dieser Abschnitte weisen somit keine Kanten auf, sondern lediglich sanfte, abgerundete Übergänge. Es können in diesem Zusammenhang anwendungsspezifische, strömungstechnisch sinnvolle Mindestradien eingehalten werden. Dadurch lassen sich Strömungsverluste in den Fließkanälen reduzieren. Ferner können unerwünschte Materialablagerungen in den Fließkanälen verhindert werden. Das Extrusionswerkzeug ist daher besonders effizient im Betrieb.

Alternativ oder zusätzlich kann wenigstens einer aus dem ersten Abschnitt des primären Fließkanals, dem ersten Abschnitt des sekundären Fließkanals und dem ersten Abschnitt des tertiären Fließkanals totzonenfrei ausgeführt sein. Bevorzugt sind alle Abschnitte totzonenfrei ausgeführt. Diese Abschnitte weisen also keine Bereiche auf, in denen eine Strömung zum Erliegen kommt oder sich eine lokale Zirkulation ausbildet. Somit können Strömungsverluste in den Fließkanälen reduziert werden. Ferner können unerwünschte Materialablagerungen in den Fließkanälen verhindert werden.

In einer Variante ist zudem wenigstens einer aus dem ersten Abschnitt des primären Fließkanals, dem ersten Abschnitt des sekundären Fließkanals und dem ersten Abschnitt des tertiären Fließkanals ohne sprunghafte Querschnittsänderung ausgeführt. Mit anderen Worten finden Querschnittsänderungen stets in kontinuierlicher Form statt.

Das Extrusionswerkzeug kann mehrere Versteifungsrippen und/oder mehrere Versteifungssäulen aufweisen, die an einem Außenumfang des Grundkörpers angeordnet sind und sich zumindest abschnittsweise entlang der Extrusionsrichtung erstrecken. Dabei ist unter dem Begriff mehrere zu verstehen, dass wenigstens zwei Versteifungsrippen und/oder wenigstens zwei Versteifungssäulen vorhanden sind. Es ergibt sich ein mechanisch stabiles und belastbares Extrusionswerkzeug. Insbesondere lässt sich ein derartiges Extrusionswerkzeug zuverlässig in einer Extrudieranlage einspannen.

In einer Variante werden die Versteifungsrippen und/oder Versteifungssäulen auch dazu verwendet, die Auslassplatte am Grundkörper zu befestigen. Beispielsweise sind hierzu in einem Abschnitt der Versteifungsrippen und/oder in einem Abschnitt der Versteifungssäulen Gewinde vorgesehen. Ein derartiges Werkzeug ist einfach und kompakt aufgebaut.

Je nach Verlauf des sekundären Fließkanals und/oder des tertiären Fließkanals kann wenigstens eine Versteifungsrippe und/oder wenigstens eine Versteifungssäule durch den sekundären Fließkanal und/oder durch den tertiären Fließkanal unterbrochen sein. Dadurch kann das Extrusionswerkzeug kompakt aufgebaut werden.

In einer Variante ist zudem wenigstens eine der Versteifungsrippen in eine Richtung senkrecht zur Extrusionsrichtung tailliert. Die Versteifungsrippe ist also in einer Richtung senkrecht zur Extrusionsrichtung lokal verschmälert. Durch eine derartige Taillierung lässt sich eine erwünschte Versteifungswirkung erreichen, wobei gleichzeitig Material für das Extrusionswerkzeug eingespart wird, sodass sich ein geringes Gewicht des Extrusionswerkzeugs ergibt.

Auch ist es möglich, dass wenigstens ein Mittelabschnitt einer der Versteifungssäulen vom Rest des Grundkörpers abgesetzt ist. Zwischen dem Mittelabschnitt der Versteifungssäule und dem Rest des Grundkörpers besteht also eine Lücke. Es lässt sich also auf materialsparende Weise ein mechanisch stabiles Extrusionswerkzeug schaffen.

In einer Variante ist im Extrusionswerkzeug wenigstens ein Temperierkanal zum Führen eines Temperiermittels vorgesehen. Dabei dient ein Temperiermittel dem Erwärmen oder Kühlen von Abschnitten des Extrusionswerkzeugs, insbesondere von Bereichen des Extrusionswerkzeugs, in denen einer oder mehrere Fließkanäle vorgesehen sind. Ein Temperiermittel umfasst beispielsweise Wasser, Öl oder ein anderes geeignetes Fluid. Das Temperiermittel kann entweder durch den Temperierkanal fließen oder darin im Wesentlichen stillstehen. Der Temperierkanal kann dabei derart im Extrusionswerkzeug angeordnet sein, dass er thermisch mit einem zugeordneten Fließkanal gekoppelt ist. Dadurch lässt sich der Fließkanal und das darin befindliche Kunststoffmaterial zuverlässig in einem gewünschten, mit engen Toleranzen versehenen Temperaturbereich halten. Es lassen sich folglich qualitativ hochwertige Extrusionsbauteile produzieren.

Außerdem wird die Aufgabe durch eine Extrudieranlage mit einem erfindungsgemäßen Extrusionswerkzeug gelöst. Eine solche Extrudieranlage ist zumindest hinsichtlich des Extrusionswerkzeugs strukturell einfach aufgebaut. Darüber hinaus lässt sie sich effizient betreiben. Ferner können mit einer derartigen Extrudieranlage Extrusionsbauteile hergestellt werden, die hohen qualitativen Anforderungen genügen.

Zusätzlich wird die Aufgabe durch ein Verfahren zur Herstellung eines Extrusionsbauteils gelöst, wobei zur Herstellung des Extrusionsbauteils eine erfindungsgemäße Extrudieranlage verwendet wird und/oder wobei das Extrusionsbauteil unter Verwendung eines erfindungsgemäßen Extrusionswerkzeugs hergestellt wird. Folglich können hochwertige Extrusionsbauteile in effizienter und zuverlässiger Weise hergestellt werden.

Zudem wird die Aufgabe durch ein Extrusionsbauteil gelöst, das mittels eines erfindungsgemäßen Verfahrens hergestellt ist. Das Extrusionsbauteil ist insbesondere ein Extrusionsdichtungsbauteil. Ein solches Extrusionsbauteil genügt hohen qualitativen Anforderungen. Insbesondere ist es aus einem Elastomermaterial oder einem Thermoplastmaterial hergestellt.

Im Folgenden wird die Erfindung anhand der beigefügten Figuren erläutert. Diese zeigen:
- Figur 1: schematisch eine erfindungsgemäße Extrudieranlage mit einem lediglich schematisch dargestellten, erfindungsgemäßen Extrusionswerkzeug, wobei mittels der Extrudieranlage ein erfindungsgemäßes Verfahren ausgeführt und ein erfindungsgemäßes Extrusionsbauteil hergestellt wird,
- Figur 2: das Extrusionswerkzeug aus Figur 1 in einer separaten, perspektivischen Ansicht,
- Figur 3: einen Grundkörper des Extrusionswerkzeugs aus Figur 2 in einer Seitenansicht,
- Figur 4: den Grundkörper aus Figur 3 in einer entlang der Ebene IV-IV geschnittenen Ansicht,
- Figur 5: den Grundkörper aus Figur 3 in einer Frontalansicht entlang der Richtung V,
- Figur 6: eine Auslassplatte des Extrusionswerkzeugs aus Figur 2 in einer Frontalansicht,
- Figur 7: die Auslassplatte aus Figur 6 in einer Seitenansicht entlang der Richtung VII in Figur 6,
- Figur 8: die Auslassplatte aus Figur 7 in einer entlang der Ebene VIII-VIII geschnittenen Ansicht,
- Figur 9: ein erfindungsgemäßes Extrusionswerkzeug gemäß einer alternativen Ausführungsform in einer perspektivischen Ansicht,
- Figur 10: das Extrusionswerkzeug aus Figur 9 in einer Frontalansicht entlang der Richtung X in Figur 9,
- Figur 11: das Extrusionswerkzeug aus den Figuren 9 und 10 in einer Seitenansicht, und
- Figur 12: das Extrusionswerkzeug aus Figur 11 in einer entlang der Ebene XII-XII geschnittenen Ansicht.

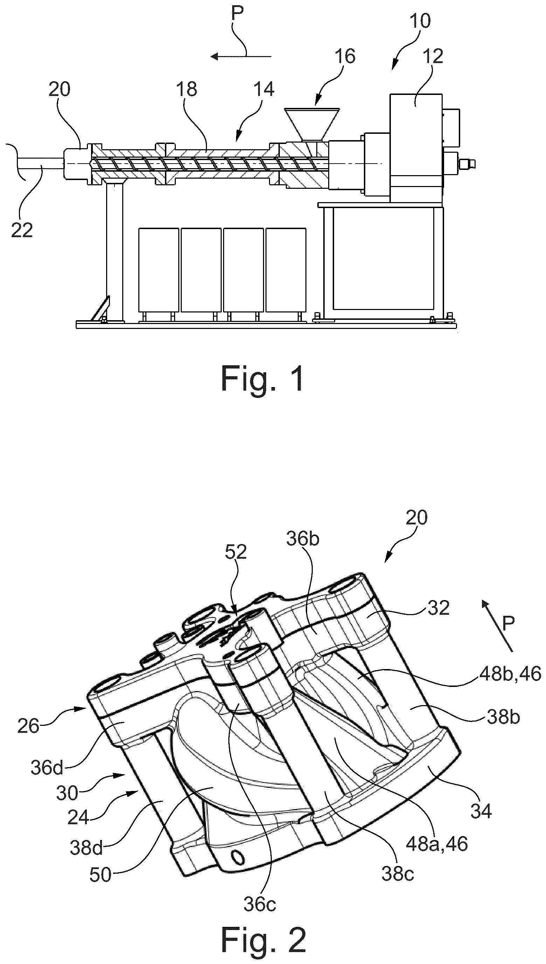

Figur 1 zeigt eine Extrudieranlage 10 mit einer Antriebseinheit 12, einer Plastifizierungseinheit 14, die einen Befülltrichter 16 und eine Schneckeneinheit 18 umfasst, und einem Extrusionskopf, in dem ein Extrusionswerkzeug 20 aufgenommen ist.

Die Extrudieranlage 10 ist dazu ausgebildet, ein Extrusionsbauteil 22 in Form eines Extrusionsdichtungsbauteils herzustellen. Mit anderen Worten ist das mittels der Extrudieranlage 10 hergestellte Extrusionsbauteil 22 eine Dichtung.

Hierzu wird der Extrudieranlage 10 über den Befülltrichter 16 Kunststoffgranulat oder Kunststoffstreifen zugeführt, das in der Schneckeneinheit 18 plastifiziert wird. Die Schneckeneinheit 18 wird mittels der Antriebseinheit 12 angetrieben. Der auf diese Weise plastifizierte Kunststoff wird dann durch das Extrusionswerkzeug 20 gedrückt, sodass das Extrusionsbauteil 22 die gewünschte Form erhält.

Nachdem das Extrusionsbauteil 22 entlang der Extrusionsrichtung P aus dem Extrusionswerkzeug 20 ausgetreten ist, kühlt es ab und/oder wird weiterverarbeitet, beispielsweise vulkanisiert.

Da in der Extrudieranlage 10 Kunststoffmaterial zum Extrusionsbauteil 22 verarbeitet wird, handelt es sich beim Extrusionsbauteil um ein Kunststoffbauteil.

Im dargestellten Beispiel wird der Kunststoff Ethylen-Propylen-Dien-Kautschuk (EPDM) zur Herstellung des Extrusionsbauteils 22 verwendet.

Das Extrusionswerkzeug 20 ist im Detail in Figur 2 dargestellt. Zum besseren Verständnis des Zusammenhangs zwischen dem Extrusionswerkzeug 20 und der Extrudieranlage 10 ist auch die Extrusionsrichtung P eingezeichnet.

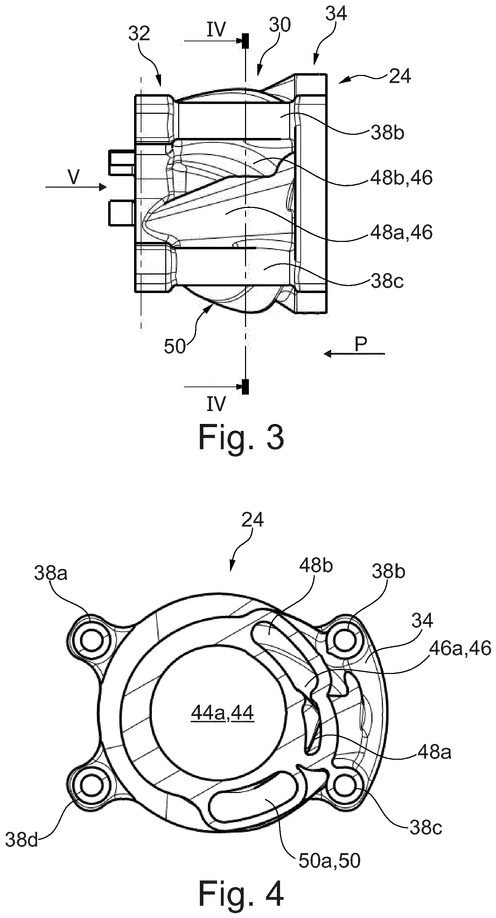

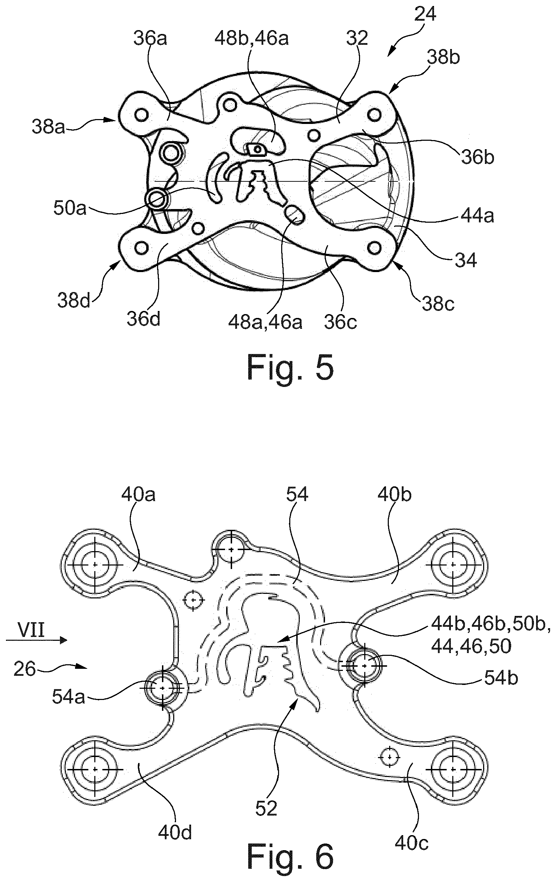

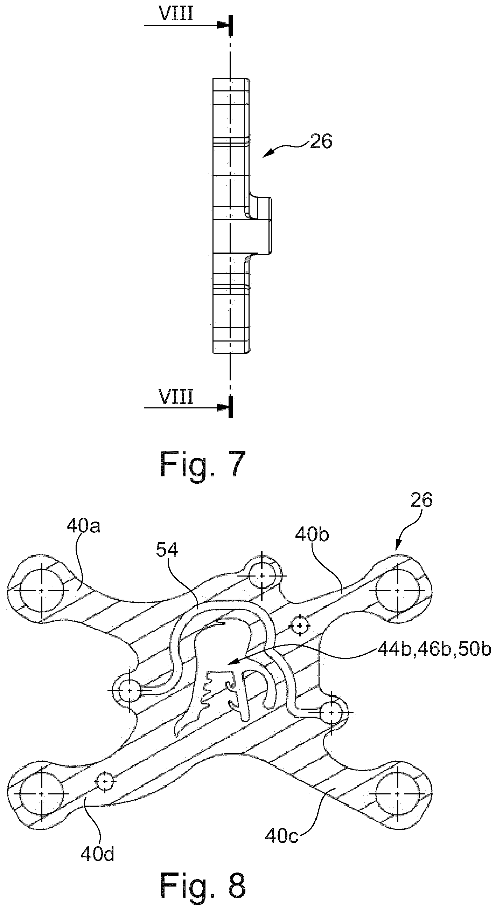

Das Extrusionswerkzeug 20 ist aus einem Grundkörper 24 (siehe auch Figuren 3 bis 5) und einer in der Extrusionsrichtung P am stromabwärtigen Ende des Grundkörpers 24 befestigten Auslassplatte 26 (siehe auch Figuren 6 bis 8) aufgebaut.

Der Grundkörper 24 umfasst ein Mittelteil 30, eine Anlageplatte 32 und eine Halteplatte 34.

Dabei sind die Anlageplatte 32 und die Halteplatte 34 an entgegengesetzten Enden des Mittelteils 30 angeordnet.

Ferner sind die Anlageplatte 32, das Mittelteil 30 und die Halteplatte 34 einstückig hergestellt. Die Anlageplatte 32, das Mittelteil 30 und die Halteplatte 34 sind also Abschnitte desselben Bauteils.

Die Anlageplatte 32 weist vier Arme 36a, 36b, 36c, 36d auf, die jeweils gegenüber einem Mittelabschnitt der Anlageplatte 32 abstehen.

Die Arme 36a, 36b, 36c, 36d sind jeweils über eine Versteifungssäule 38a, 38b, 38c, 38d mit der Halteplatte 34 verbunden.

Die Versteifungssäulen 38a, 38b, 38c, 38d sind an einem Außenumfang des Grundkörpers 24, genauer gesagt an einem Außenumfang des Mittelteils 30, angeordnet und erstrecken sich entlang der Extrusionsrichtung P.

Dabei ist zwischen Mittelabschnitten der Versteifungssäulen 38a, 38b, 38c, 38d und dem Mittelteil 30 jeweils eine Lücke. Mit anderen Worten sind die Mittelabschnitte der Versteifungssäulen 38a, 38b, 38c, 38d vom Rest des Grundkörpers 24, genauer gesagt von dessen Mittelteil 30, abgesetzt.

Dabei dienen die Versteifungssäulen 38a, 38b, 38c, 38d dazu, das Extrusionswerkzeug 20 entlang der Extrusionsrichtung P zu versteifen, sodass es präzise und zuverlässig am Ende der Plastifizierungseinheit 14 der Extrudieranlage 10 eingespannt werden kann.

Die Auslassplatte 26 liegt im montierten Zustand des Extrusionswerkzeugs 20 auf der Anlageplatte 32 auf.

Dabei weist die Auslasspatte 26 ebenfalls vier seitlich abstehende Befestigungsarme 40a, 40b, 40c, 40d auf, die zu den Armen 36a, 36b, 36c, 36d der Anlageplatte 32 des Grundkörpers 24 korrespondierend ausgebildet sind.

Die Auslassplatte 26 kann mittels vier Schrauben die durch zugeordnete Öffnungen an den jeweiligen Enden der Befestigungsarme 40a, 40b, 40c der Auslassplatte 26 in die Montagesäulen 38a, 38b, 38c, 38d eingedreht werden, mit dem Grundkörper 24, genauer gesagt mit dessen Halteplatte 34, verbunden werden.

Das Extrusionswerkzeug 20 umfasst zudem insgesamt drei Fließkanäle, die jeweils zum Leiten unterschiedlicher Extrusionsmaterialien vorgesehen sind. Das Extrusionswerkzeug ist also dazu ausgebildet, ein Extrusionsbauteil 22 aus drei Komponenten herzustellen.

Ein primärer Fließkanal 44 umfasst einen ersten Abschnitt 44a, der im Grundkörper 24 angeordnet ist und einen zweiten Abschnitt 44b, der in der Auslassplatte 26 positioniert ist.

Der erste Abschnitt 44a mündet entlang der Extrusionsrichtung P in den zweiten Abschnitt 44b.

Dabei verläuft der primäre Fließkanal 44 zentral im Extrusionswerkzeug 20.

Darüber hinaus verläuft eine Mittelachse des primären Fließkanals 44 im Wesentlichen geradlinig, d.h. entlang der Extrusionsrichtung P.

Ein zweiter Fließkanal ist als sekundärer Fließkanal 46 ausgebildet.

Auch der sekundäre Fließkanal 46 umfasst einen ersten Abschnitt 46a, der innerhalb des Grundkörpers 24 verläuft und einen zweiten Abschnitt 46b, der innerhalb der Auslassplatte 26 angeordnet ist.

Wieder mündet der erste Abschnitt 46a entlang der Extrusionsrichtung P in den zweiten Abschnitt 46b.

Darüber hinaus läuft der erste Abschnitt 46a des sekundären Fließkanals 46 schraubenförmig um den ersten Abschnitt 44a des primären Fließkanals 44 herum.

Zusätzlich verzweigt sich der erste Abschnitt 46a des sekundären Fließkanals 46 innerhalb des Grundkörpers 24 und entlang der Extrusionsrichtung P in zwei Fließkanalstränge 48a, 48b.

Dabei ist die Verzweigung ohne sprunghafte Querschnittsänderung gestaltet, sie verläuft also kontinuierlich.

Auch ein dritter Fließkanal des Extrusionswerkzeugs ist als sekundärer Fließkanal 50 ausgebildet, dessen erster Abschnitt 50a schraubenförmig um den ersten Abschnitt 44a des primären Fließkanals 44 herumläuft. Im Unterschied zum sekundären Fließkanal 48 verzweigt sich der sekundäre Fließkanal 50 jedoch nicht.

Es versteht sich, dass mittels der in den Fließkanälen 44, 46, 50 geführten Extrusionsmaterialien ein zusammenhängendes Extrusionsbauteil 22 hergestellt wird. Aus diesem Grund vereinigen sich spätestens in der Auslassplatte 46 alle zweiten Abschnitte 44b, 46b, 50b drei Fließkanäle 44, 46, 50 zu einer gemeinsamen, in Extrusionsrichtung P am stromabwärtigen Ende der Auslassplatte 26 liegenden Auslassöffnung 52.

Im Betrieb verlässt das Extrusionsbauteil 22 durch die Auslassöffnung 52 das Extrusionswerkzeug 20.

Ferner versteht es sich, dass alternativ oder zusätzlich zu den beiden sekundären Fließkanälen 46, 50 auch ein Fließkanal verwendet werden kann, dessen erster Abschnitt bei einer Betrachtung senkrecht zur Extrusionsrichtung P wenigstens abschnittsweise geradlinig verläuft und bei einer Betrachtung in Extrusionsrichtung P außerhalb des ersten Abschnitts 44a des primären Fließkanals 44 liegt. Ein solcher Fließkanal wird als tertiärer Fließkanal bezeichnet.

In der dargestellten Ausführungsform sind der erste Abschnitt 44a des primären Fließkanals 44 und die ersten Abschnitte 46a, 50a der sekundären Fließkanäle 46, 50 prallflächenfrei ausgeführt.

Zudem sind der erste Abschnitt 44a des primären Fließkanals 44 und die ersten Abschnitte 46a, 50a der sekundären Fließkanäle 46, 50 kantenfrei ausgeführt.

Um eine Temperatur der jeweils zweiten Abschnitte der Fließkanäle 44, 46, 50, die in der Auslassplatte 26 angeordnet sind, innerhalb eines gewünschten Bereichs zu halten, ist in der Auslassplatte 26 ein Temperierkanal 54 vorgesehen, durch den ein Temperiermittel, z. B. ein Kühlmittel, geleitet werden kann.

In der dargestellten Ausführungsform folgt der Temperierkanal 54 einer gemeinsamen Hüllkontur der Fließkanäle 44, 46, 50, sodass sich ein im Wesentlichen gleichförmiger Temperiereffekt ergibt.

An einem ersten Ende des Temperierkanals 54 ist ferner eine erste Anschlussöffnung 54a vorgesehen und an einem zweiten Ende des Temperierkanals eine zweite Anschlussöffnung 54b. Über die Anschlussöffnungen 54b kann ein Temperiermittel in den Temperierkanal 54 eingeleitet oder aus diesem ausgeleitet werden.

Der Grundkörper 24 und die Auslassplatte 26 sind jeweils durch ein additives Fertigungsverfahren aus Metall hergestellt und einstückig. Genauer gesagt sind diese Bauteile jeweils durch ein SLM-Verfahren hergestellt.

Bei der Herstellung des Extrusionswerkzeugs 20 muss also lediglich die Auslassplatte 26 an den Grundkörper 24 angeschraubt werden. Weitere Montageoperationen sind nicht notwendig.

Wie bereits eingangs erwähnt, lässt sich mittels der Extrudieranlage 10 das Extrusionsbauteil 22 herstellen. Mit anderen Worten kann mit der Extrudieranlage 10 ein Verfahren zum Herstellen eines Extrusionsbauteils 22 ausgeführt werden. Dabei werden die Extrudieranlage 10 sowie das Extrusionswerkzeug 20 verwendet.

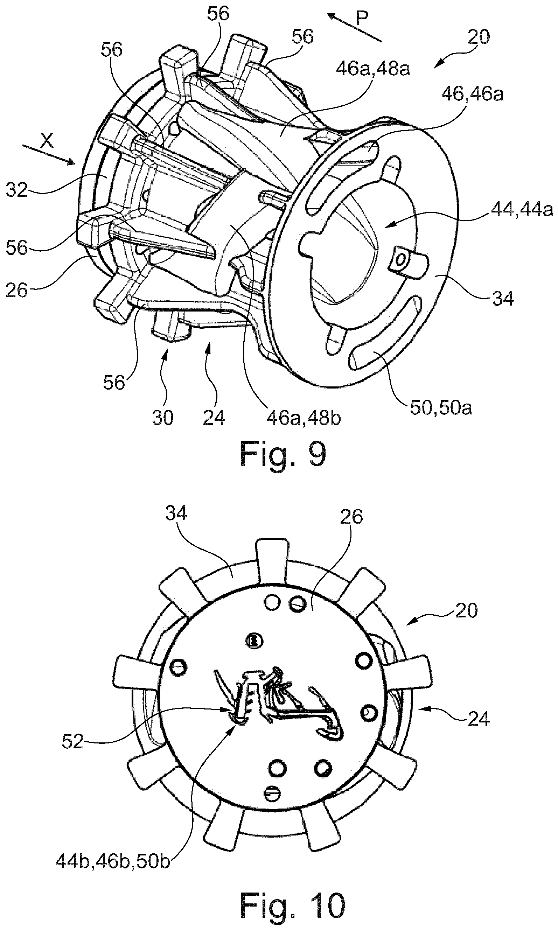

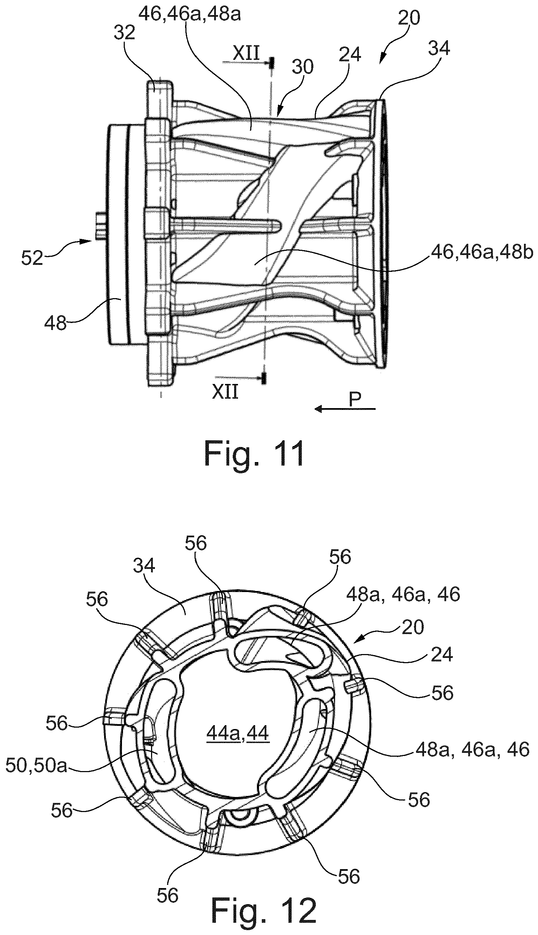

In den Figuren 9 bis 12 ist ein Extrusionswerkzeug 20 gemäß einer alternativen Ausführungsform gezeigt.

Dabei wird lediglich auf die Unterschiede zum Extrusionswerkzeug 20 aus den Figuren 2 bis 8 eingegangen. Gleiche oder einander entsprechende Bauteile werden mit denselben Bezugszeichen versehen.

Ein erster Unterschied besteht darin, dass anstelle von Versteifungssäulen mehrere Versteifungsrippen 56 am Außenumfang des Grundköpers 24 angeordnet sind.

Die Versteifungsrippen 56 erstrecken sich entlang der Extrusionsrichtung P und verbinden dabei die Anlageplatte 32 und die Halteplatte 34.

Bei einer Betrachtung entlang der Extrusionsrichtung P sind die Versteifungsrippen 56 sternförmig am Außenumfang angeordnet.

Ferner sind die Versteifungsrippen 56 in eine Richtung senkrecht zur Extrusionsrichtung tailliert (siehe insbesondere Figur 9).

Der primäre Fließkanal 44 und seine Abschnitte 44a, 44b sowie die sekundären Fließkanäle 46, 50 mit ihren Abschnitten 46a, 46b, 50a, 50b verlaufen im Detail etwas anders als beim Extrusionswerkzeug 20 aus den Figuren 2 bis 8, sind jedoch prinzipiell in gleicher Weise aufgebaut.

Dabei durch dringen die Fließkanalstränge 48a, 48b des sekundären Fließkanals 46 manche der Versteifungsrippen 56. Mit anderen Worten sind die Versteifungsrippen 56 in denjenigen Bereichen unterbrochen, in denen die Fließkanalstränge 48a, 48b des sekundären Fließkanals 46 verlaufen.

Auch unter Nutzung des Extrusionswerkzeugs 20 aus den Figuren 9 bis 12 kann das oben beschriebene Verfahren zur Herstellung des Extrusionsbauteils ausgeführt werden. Dabei wird ein Extrusionsbauteil 22 geschaffen, dessen Geometrie gegenüber dem mittels des Extrusionswerkzeugs 20 aus den Figuren 2 bis 8 geschaffenen Extrusionsbauteils 22 leicht abweicht.

Dabei kommt das Extrusionswerkzeug 20 aus den Figuren 9 bis 12 ohne Arme und Befestigungsarme aus. Ebenso wenig ist ein Temperierkanal vorgesehen.

### Bezugszeichenliste

- 10: Extrudieranlage
- 12: Antriebseinheit
- 14: Plastifizierungseinheit
- 16: Befülltrichter
- 18: Schneckeneinheit
- 20: Extrusionswerkzeug
- 22: Extrusionsbauteil
- 24: Grundkörper
- 26: Auslassplatte
- 30: Mittelteil
- 32: Anlageplatte
- 34: Halteplatte
- 36a: Arm
- 36b: Arm
- 36c: Arm
- 36d: Arm
- 38a: Versteifungssäule
- 38b: Versteifungssäule
- 38c: Versteifungssäule
- 38d: Versteifungssäule
- 40a: Befestigungsarm
- 40b: Befestigungsarm
- 40c: Befestigungsarm
- 40d: Befestigungsarm
- 44: primärer Fließkanal
- 44a: erster Abschnitt des primären Fließkanals
- 44b: zweiter Abschnitt des primären Fließkanals
- 46: sekundärer Fließkanal
- 46a: erster Abschnitt des sekundären Fließkanals
- 46b: zweiter Abschnitt des sekundären Fließkanals
- 48a: Fließkanalstrang des sekundären Fließkanals
- 48b: Fließkanalstrang des sekundären Fließkanals
- 50: sekundärer Fließkanal
- 50a: erster Abschnitt des sekundären Fließkanals
- 50b: zweiter Abschnitt des sekundären Fließkanals
- 52: Auslassöffnung
- 54: Temperierkanal
- 54a: Anschlussöffnung
- 54b: Anschlussöffnung
- 56: Versteifungsrippe

- P: Extrusionsrichtung

## Patentansprüche

1. Extrusionswerkzeug (20) zur Herstellung eines Kunststoffbauteils, mit einem Grundkörper (24) und einer in Extrusionsrichtung (P) am stromabwärtigen Ende des Grundkörpers (24) befestigten Auslassplatte (26),
wobei wenigstens ein Bauteil aus Grundkörper (24) und Auslassplatte (26) wenigstens abschnittsweise durch ein additives Fertigungsverfahren aus Metall hergestellt ist.

2. Extrusionswerkzeug (20) nach Anspruch 1, wobei wenigstens ein Bauteil aus Grundkörper (24) und Auslassplatte (26) einstückig hergestellt ist.

3. Extrusionswerkzeug (20) nach einem der vorhergehenden Ansprüche, umfassend wenigstens einen primären Fließkanal (44) für Extrusionsmaterial mit einem ersten Abschnitt (44a), der im Grundkörper (24) angeordnet ist, und einem zweiten Abschnitt (44b), der in der Auslassplatte (26) angeordnet ist, wobei der erste Abschnitt (44a) entlang der Extrusionsrichtung (P) in den zweiten Abschnitt (44b) mündet und wobei der primäre Fließkanal (44) zentral im Extrusionswerkzeug (20) verläuft.

4. Extrusionswerkzeug (20) nach Anspruch 3, umfassend wenigstens einen sekundären Fließkanal (46, 50) für Extrusionsmaterial mit einem ersten Abschnitt (46a, 50a), der im Grundkörper (24) angeordnet ist, und einem zweiten Abschnitt (46b, 50b), der in der Auslassplatte (26) angeordnet ist, wobei der erste Abschnitt (46a, 50a) entlang der Extrusionsrichtung (P) in den zweiten Abschnitt (46b, 50b) mündet und wobei der erste Abschnitt (46a, 50a) des sekundären Fließkanals (46, 50) wenigstens abschnittsweise schraubenförmig um den ersten Abschnitt (44a) des primären Fließkanals (44) läuft.

5. Extrusionswerkzeug (20) Anspruch 3 oder 4, umfassend einen tertiären Fließkanal für Extrusionsmaterial mit einem ersten Abschnitt, der im Grundkörper (24) angeordnet ist, und einem zweiten Abschnitt, der in der Auslassplatte (26) angeordnet ist, wobei der erste Abschnitt entlang der Extrusionsrichtung (P) in den zweiten Abschnitt mündet und wobei der erste Abschnitt des tertiären Fließkanals bei einer Betrachtung senkrecht zur Extrusionsrichtung (P) wenigstens abschnittsweise geradlinig verläuft und bei einer Betrachtung in Extrusionsrichtung (P) außerhalb des ersten Abschnitts (44a) des primären Fließkanals (44) liegt.

6. Extrusionswerkzeug (20) nach Anspruch 4 oder 5, wobei sich der erste Abschnitt (46a, 50a) des sekundären Fließkanals (46, 50) und/oder der erste Abschnitt des tertiären Fließkanals innerhalb des Grundkörpers (24) und entlang der Extrusionsrichtung (P) in wenigstens zwei Fließkanalstränge (48a, 48b) verzweigt.

7. Extrusionswerkzeug (20) nach einem der Ansprüche 3 bis 6, wobei wenigstens einer aus dem ersten Abschnitt (44a) des primären Fließkanals (44), dem ersten Abschnitt (46a, 50a) des sekundären Fließkanals (46, 50) und dem ersten Abschnitt des tertiären Fließkanals prallflächenfrei ausgeführt ist.

8. Extrusionswerkzeug (20) nach einem der Ansprüche Anspruch 3 bis 7, wobei wenigstens einer aus dem ersten Abschnitt (44a) des primären Fließkanals (44), dem ersten Abschnitt (46a, 50a) des sekundären Fließkanals (46, 50) und dem ersten Abschnitt des tertiären Fließkanals kantenfrei ausgeführt ist.

9. Extrusionswerkzeug (20) nach einem der vorhergehenden Ansprüche, wobei an einem Außenumfang des Grundkörpers (24) mehrere Versteifungsrippen (56) und/oder mehrere Versteifungssäulen (38a, 38b, 38c, 38d) angeordnet sind, die sich zumindest abschnittsweise entlang der Extrusionsrichtung (P) erstrecken.

10. Extrusionswerkzeug nach Anspruch 9, wobei wenigstens eine der Versteifungsrippen (56) in eine Richtung senkrecht zur Extrusionsrichtung (P) tailliert ist.

11. Extrusionswerkzeug (20) nach Anspruch 9 oder 10, wobei wenigstens ein Mittelabschnitt einer der Versteifungssäulen (38a, 38b, 38c, 38d) vom Rest des Grundkörpers (24) abgesetzt ist.

12. Extrusionswerkzeug (20) nach einem der vorhergehenden Ansprüche, umfassend wenigstens einen Temperierkanal (54) zum Führen eines Temperiermittels.

13. Extrudieranlage (10) mit einem Extrusionswerkzeug (20) nach einem der vorhergehenden Ansprüche.

14. Verfahren zur Herstellung eines Extrusionsbauteils (22), **dadurch gekennzeichnet, dass** zur Herstellung des Extrusionsbauteils (22) eine Extrudieranlage (10) nach Anspruch 13 verwendet wird und/oder das Extrusionsbauteil (22) unter Verwendung eines Extrusionswerkzeugs (20) nach einem der Ansprüche 1 bis 12 hergestellt wird.

15. Extrusionsbauteil (22), insbesondere Extrusionsdichtungsbauteil, hergestellt mittels eines Verfahrens nach Anspruch 14.
